Europäisches Patentamt

European Patent Office

Office européen des brevets

(19)

(11) Veröffentlichungsnummer: **0 253 224 B1**

(12) # EUROPÄISCHE PATENTSCHRIFT

(45) Veröffentlichungstag der Patentschrift: 24.07.91

(51) Int. Cl.⁵: **H05B 41/29**

(21) Anmeldenummer: 87109551.9

(22) Anmeldetag: 02.07.87

(54) **Schaltungsanordnung zum Betrieb von Niederdruckentladungslampen.**

(30) Priorität: 14.07.86 DE 3623749

(43) Veröffentlichungstag der Anmeldung:
20.01.88 Patentblatt 88/03

(45) Bekanntmachung des Hinweises auf die
Patenterteilung:
24.07.91 Patentblatt 91/30

(84) Benannte Vertragsstaaten:
AT BE CH DE FR GB IT LI NL SE

(56) Entgegenhaltungen:
US-A- 4 075 476
US-A- 4 563 719

(73) Patentinhaber: **Patent-Treuhand-Gesellschaft
für elektrische Glühlampen mbH
Hellabrunner Strasse 1
W-8000 München 90(DE)**

(72) Erfinder: **Fähnrich, Hans-Jürgen
Hofheimerstrasse 11
W-8000 München 60(DE)**
Erfinder: **Zuchtriegel, Anton
Sudetenstrasse 33
W-8028 Taufkirchen(DE)**

**Beschreibung**

Die Erfindung betrifft eine Schaltungsanordnung zum hochfrequenten Betrieb einer oder mehrerer parallel zueinander geschalteter Niederdruckentladungslampen, wobei die Schaltung folgende Merkmale aufweist:

- einen Netzgleichrichter mit parallel zum Gleichstromausgang geschaltetem Stützkondensator
- einen an den Gleichstromausgang des Netzgleichrichters angeschlossenen Gegentaktfrequenzgenerator mit zwei alternierend schaltenden Transistoren und einer Ansteuerschaltung, wobei ein Mittenabgriff zwischen den beiden Transistoren vorgesehen ist
- einen jeder Niederdruckentladungslampe zugeordneten Serienresonanzkreis, bestehend aus Resonanzinduktivität, Kopplungskondensator und Resonanzkapazität
- Anschlußleitungen für die Niederdruckentladungslampen, wobei jeweils eine Leitung die ersten Elektroden der Lampen über die Resonanzinduktivitäten mit dem Mittenabgriff zwischen den beiden Transistoren und jeweils eine weitere Leitung die zweiten Elektroden der Lampen mit dem Plus- und/oder Minuspol des Netzgleichrichters verbindet
- einen Glättungskondensator parallel zu den Schaltstrecken der beiden Transistoren des Gegentaktfrequenzgenerators
- und ein Oberwellenfilter, bestehend aus einer Reihenschaltung von zwei Dioden sowie aus zwei oder mehr Kondensatoren, wobei die Reihenschaltung der Dioden in Gleichstromvorwärtsrichtung und in Serie zum Stützkondensator am Netzgleichrichter angeschlossen ist und der Mittenabgriff zwischen den beiden Dioden über den ersten Kondensator mit dem Mittenabgriff zwischen den beiden Transistoren und über jeweils einen weiteren Kondensator mit dem Mittenabgriff zwischen der Resonanzinduktivität des jeweiligen Serienresonanzkreises und der entsprechenden Elektrode der Lampe verbunden ist.

Anstelle einer Niederdruckentladungslampe können mit der Schaltungsanordnung in gleicher Weise auch mehrere in Reihe geschaltete Lampen betrieben werden. Dabei ist jeweils die erste Elektrode der ersten Lampe über die Resonanzinduktivität mit dem Mittenabgriff zwischen den beiden Transistoren und die zweite Elektrode der letzten Lampe mit dem Plus- und/oder Minuspol des Netzgleichrichters verbunden.

Eine solche Schaltungsanordnung ist in der deutschen Patentanmeldung P 36 11 611.4 vorgeschlagen. Die Oberwellenfilter-Schaltung weist zusätzlich eine Eisendrossel im netzfrequenten Teil der Schaltungsanordnung auf, um die verbleibenden Ladespitzen im vom Netz aufgenommenen Stromfluß so zu verschleifen, daß die Endstromform die bestehenden Vorschriften erfüllt.

Die Eisendrossel besitzt bedeutend größere Abmessungen als die sonst in der Schaltungsanordnung verwendeten Bauteile. Die Schaltungsanordnung kann somit nicht auf engstem Raum untergebracht werden, wodurch z.B. eine Integration der Schaltung in den Sockel einer Niederdruckentladungslampe unmöglich ist.

Ziel der Erfindung ist es, eine Schaltungsanordnung zum Betrieb von Niederdruckentladungslampen zu schaffen, die eine Oberwellenfilter-Schaltung enthält, mit der auf eine Eisendrossel verzichtet werden kann. Die für das Oberwellenfilter benötigten Schaltungselemente sollten möglichst kleine Abmessungen aufweisen. Die Schaltungsanordnung sollte mit den neuen Schaltungsteilen eine optimale Filterung des Oberwellengehaltes ermöglichen.

Die Schaltungsanordnung zum hochfrequenten Betrieb einer oder mehrerer parallel zueinander geschalteter Niederdruckentladungslampen mit den im Oberbegriff des Hauptanspruchs aufgeführten Merkmalen ist erfindungsgemäß dadurch gekennzeichnet, daß als Oberwellenfilter parallel zur Reihenschaltung der beiden Dioden in Gleichstromvorwärtsrichtung zwei weitere Dioden in Serie geschaltet sind, wobei der Mittenabgriff zwischen den beiden weiteren Dioden über einen Kondensator mit dem Mittenabgriff zwischen den beiden Transistoren des Gegentaktfrequenzgenerators verbunden ist.

Mit den zusätzlichen Schaltungselementen wird ein "Doppelpumpensystem" geschaffen, das laufend Energie in den Glättungskondensator zurückführt. Das Oberwellenfilter gewährleistet so eine sinusförmige Netzstromaufnahme und eine lineare Abhängigkeit der Lampenleistung von der Netzspannung.

Die Summe der Kapazitäten in nF der Kondensatoren des Oberwellenfilters darf einen durch die Formel

$$C_{Res} = (P_{Ges} \cdot \sqrt{2} \cdot 10^9) / (U_N^2 \cdot f_B)$$

errechneten Höchstwert nicht überschreiten. Dabei ist $P_{Ges}$ die von der bzw. den Lampen plus Schaltungsanordnung aufgenommene Gesamtleistung in W, $U_N$ die Nenn-Netzspannung in V für das System und $f_B$ die Lampen-Betriebsfrequenz in Hz. Wird der für die gesamte Pumpkapazität festgelegte Höchstwert überschritten, so treten Schaltverluste auf, da die in den Kondensatoren gespeicherte Kapazität während der Pausenzeiten der Schalttransistoren nicht vollständig in den Glättungskondensator abfließen kann. Außerdem werden die Transistoren dabei mit Kurzschlußströmen belastet und können zerstört werden.

Der Kondensator, der den Mittenabgriff zwischen den beiden weiteren Dioden mit dem Mittenabgriff zwischen den beiden Transistoren des Gegentaktfrequenzgenerators verbindet, muß eine Kapazität aufweisen, die 0,1 bis 0,4 mal der Summe der Kapazitäten der Kondensatoren des Oberwellenfilters ist. Diese Einschränkung ist notwendig aufgrund der quadratischen Änderung der Energie im Verlauf der sinusförmigen Netzspannungshalbwelle. Wird die Kapazität des Kondensators zu groß, so stellt sich eine sehr starke 3. Harmonische in den Oberschwingungen ein. Zusätzlich verstärkt sich auch die Abhängigkeit der Lampenleistung von der Netzspannung. Als besonders günstig hat sich in Versuchsschaltungen eine Kapazität für den Kondensator herausgestellt, die 20 % der Gesamtkapazität aller am Oberwellenfilter beteiligten Kondensatoren hat.

Die Schaltungsanordnung ist anhand der nachfolgenden Figuren näher veranschaulicht.

Figur 1　zeigt ein Blockschaltbild der Schaltungsanordnung mit Oberwellenfilter für eine Niederdruckentladungslampe

Figur 2　zeigt das Schaltbild einer Schaltungsanordnung mit Oberwellenfilter zum Betrieb einer Niederdruckentladungslampe

Figur 3　zeigt das Schaltbild einer Schaltungsanordnung mit Oberwellenfilter zum Betrieb von zwei parallelgeschalteten Niederdruckentladungslampen

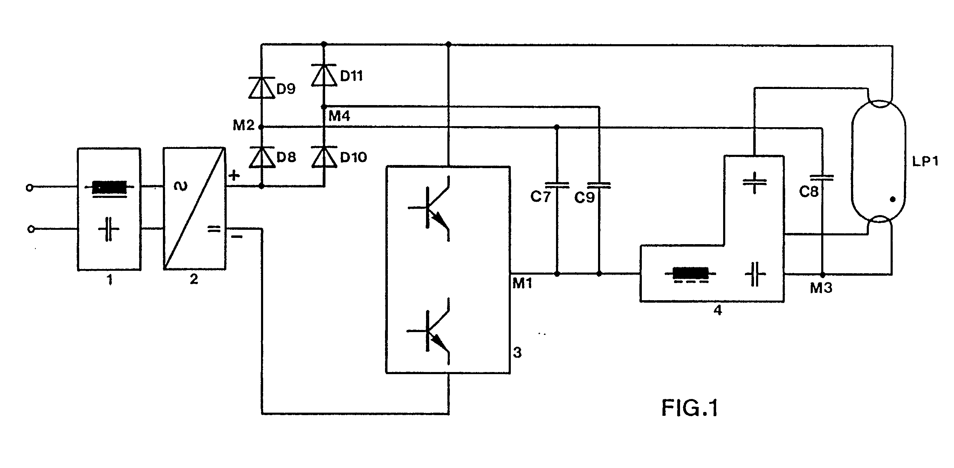

Das Blockschaltbild in Figur 1 gibt den Prinzipaufbau der erfindungsgemäßen Schaltungsanordnung für eine Niederdruckentladungslampe wieder. Die Schaltungsanordnung beinhaltet ein Hochfrequenzfilter 1, einen Netzgleichrichter 2 sowie einen Gegentaktfrequenzgenerator mit Ansteuerschaltung 3, dessen in Reihe liegende gleichsinnig gepolte Schalttransistoren den Gleichstromausgang des Netzgleichrichters 2 überbrücken. Zwischen den Mittenabgriff M1 der Schalttransistoren und den Pluspol des Netzgleichrichters 2 ist über einen Serienresonanzkreis 4 die Niederdruckentladungslampe LP1 geschaltet.

Das Oberwellenfilter besteht aus einer Reihenschaltung von zwei Dioden D8 und D9, die in Gleichstromvorwärtsrichtung zwischen den Pluspol des Netzgleichrichters 2 und die entsprechende Elektrode der Niederdruckentladungslampe LP1 geschaltet sind. Der Mittenabgriff M2 zwischen den beiden Dioden D8, D9 ist über einen Kondensator C7 mit dem Mittenabgriff M1 zwischen den beiden Transistoren des Gegentaktfrequenzgenerators 3 und über einen Kondensator C8 mit dem Mittenabgriff M3 zwischen den Serienresonanzkreis 4 und der entsprechenden anderen Elektrode der Lampe LP1 verbunden. Parallel zu den beiden Dioden D8, D9 sind in Reihe zwei weitere Dioden D10 und D11 in Gleichstromvorwärtsrichtung geschaltet, wobei der Mittenabgriff M4 zwischen den beiden Dioden D10, D11 über einen Kondensator C9 ebenfalls mit dem Mittenabgriff M1 zwischen den beiden Transistoren des Gegentaktfrequenzgenerators 3 verbunden ist.

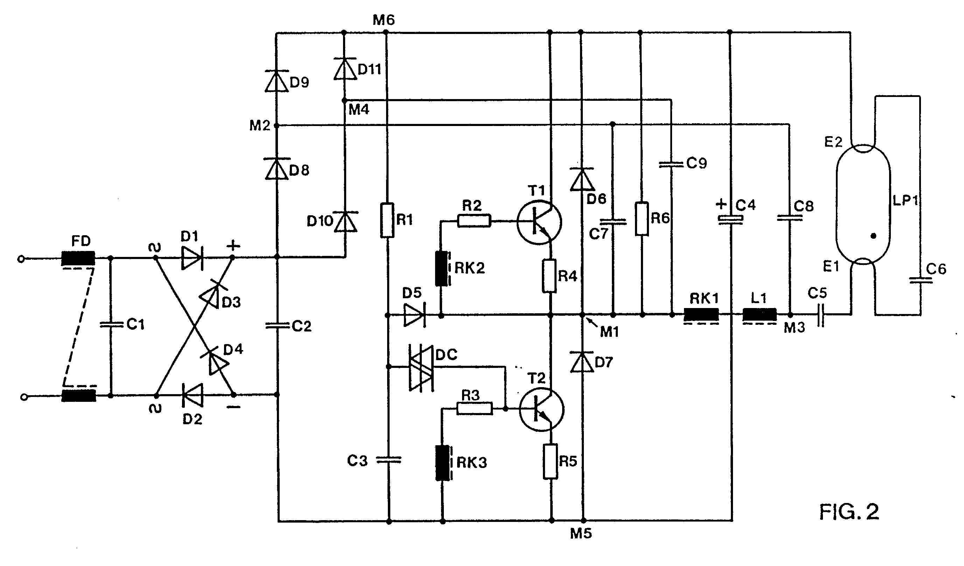

Figur 2 zeigt das genaue Schaltbild einer Schaltungsanordnung mit erfindungsgemäßem Oberwellenfilter zum Betrieb einer Niederdruckentladungslampe. Direkt an den Netzeingang ist in jede Zuleitung ein Block einer stromkompensierten Filterdrossel FD sowie parallel zum Eingang des Netzgleichrichters ein Filterkondensator C1 geschaltet. Diesem Hochfrequenzfilter folgt der Netzgleichrichter mit den Dioden D1 bis D4 sowie parallel zum Gleichstromausgang ein Stützkondensator C2. Der selbststeuernde Gegentaktfrequenzgenerator besteht aus den beiden Transistoren T1, T2 mit den Rückstromdioden D6, D7, den Vorschaltwiderständen R2 bis R5, dem Steuerübertrager und dem Anlaufgenerator mit den Widerständen R1, R6, dem Startkondensator C3, der Diode D5 sowie dem Diac DC. Der Steuerübertrager arbeitet nach dem Rückkopplungsprinzip und setzt sich aus der Primärwicklung RK1 sowie den beiden Sekundärwicklungen RK2 und RK3 zusammen. Die Lampe LP1 ist mit einem Anschluß der Elektrode E1 mit dem Mittenabgriff M1 zwischen den beiden Transistoren T1, T2 und mit einem Anschluß der anderen Elektrode E2 mit dem Pluspol des Netzgleichrichters verbunden. Außerdem ist ein Serienresonanzkreis aus Resonanzinduktivität L1, Koppelkondensator C5 und Resonanzkondensator C6 vorgesehen, wobei die Resonanzinduktivität L1 und der Koppelkondensator C5 zwischen die Primärwicklung RK1 des Steuerübertragers und den entsprechenden Anschluß der Elektrode E1 und der Resonanzkondensator C6 zwischen die auf der Heizkreisseite liegenden Anschlüsse der Elektroden E1 und E2 geschaltet sind. Parallel zu den Schaltstrecken der Transistoren T1, T2 liegt außerdem ein Glättungskondensator C4.

Die Funktionsweise einer solchen Schaltungsanordnung mit Gegentaktfrequenzgenerator und Serienresonanzkreis zum Zünden und Betrieb einer Niederdruckentladungslampe kann dem Buch "Elektronikschaltungen" von W. Hirschmann (SIEMENS AG), Seite 148, entnommen werden und soll hier nicht näher ausgeführt werden.

Die Schaltungsanordnung weist weiterhin ein Oberwellenfilter auf. Das Filter besteht aus zwei in Reihe und in Gleichstromvorwärtsrichtung am Stützkondensator C2 angeschlossenen Dioden D8, D9, wobei der Mittenabgriff M2 zwischen den beiden Dioden D8, D9 über einen Kondensator C7 mit dem Mittenabgriff M1 zwischen den beiden Transistoren T1, T2 und über einen Kondensator C8 mit dem Mittenabgriff M3 zwischen Resonanzinduktivität L1 und Koppelkondensator C5 verbunden ist. Das Oberwellenfilter beinhaltet außerdem parallel zu den ersten beiden Dioden D8, D9 zwei weitere in Reihe und in Gleichstromvorwärtsrichtung geschaltete Dioden D10, D11, wobei der Mittenabgriff M4 zwischen diesen beiden Dioden D10, D11 über einen Kondensator C9 ebenfalls mit dem Mittenabgriff M1 zwischen den beiden Transistoren T1, T2 verbunden ist.

Die Funktionsweise des Oberwellenfilters im Zusammenwirken mit dem Gegentaktfrequenzgenerator ist im folgenden näher erläutert:

Takt 1 : Der Transistor T2 wird leitend und zieht damit das Potential des Punktes M1 auf das Potential des Punktes M5 herunter, das gleich dem Potential des Minuspols am Glättungskondensator C4 ist. Die Pumpkondensatoren C7, C8, C9 werden entsprechend der Potentialdifferenz "Augenblickswert der Spannung am Stützkondensator C2" zu "Potential am Punkt M5" geladen, im Scheitel der Netzspannung auf $U_N \bullet \sqrt{2}$.

Takt 2 : Der Transistor T2 sperrt, die Potentiale an den Punkten M1 und M3 werden sprunghaft angehoben und heben damit auch die Potentiale der Kondensatoren C7, C8, C9. Die Kondensatoren C7, C8, C9 erhalten ein höheres Potential als das des Glättungskondensators C4 und können sich somit in diesen Kondensator C4 entladen.

Takt 3 : Der Transistor T1 schaltet durch und hebt das Potential des Punktes M1 auf das Potential des Punktes M6 an, das dem Potential des Pluspols am Glättungskondensator C4 entspricht. Die Resonanzinduktivität L1 wird in Gegenrichtung geladen.

Takt 4 : Der Transistor T1 sperrt und veranlaßt so die Resonanzinduktivität L1, sich in die Kondensatoren C7, C9 und damit auch C8 zu entladen. Die Pumpkondensatoren C7, C8, C9 werden somit auch im Bereich des Netzspannungs-Nulldurchganges geladen, da das Potential der Pumpkondensatoren C7, C8, C9 in diesem Bereich negativ zum Augenblickswert des Stützkondensators C2 wird.

Anschließend folgt wieder der Takt 1 und der Energietransport beginnt von neuem. Pro Periode der Hf-Betriebsfrequenz wird so einmal Energie in den Glättungskondensator C4 gepumpt. Im Bereich des Netzspannungs-Scheitelwertes werden die Pump-Kondensatoren C7, C8, C9 auf den Scheitelwert der Netzspannung aufgeladen, anschließend sinkt die Spannung und damit die Energie wieder. In den Glättungskondensator C4 wird während der Netzspannungshalbwelle Energie entsprechend dem Augenblickswert der pulsierenden Gleichspannung am Stützkondensator C2 gepumpt, vermindert um die in der Resonanzinduktivität L1 gespeicherte Energie.

Im Bereich des Netzspannungs-Nulldurchganges ist die netzspannungsbedingte Potentialdifferenz zwischen dem Punkt M5 und dem Pluspol des Netzgleichrichters Null, trotzdem kommt es zu einer Spannungsdifferenz: Die in der Resonanzinduktivität L1 gespeicherte Energie wird in diesem Bereich zum Teil über die Kondensatoren C7 und C8 in den Glättungskondensator C4 zurückgepumpt.

In der nachfolgenden Bestückungsliste sind die verwendeten Schaltungselemente für eine Schaltungsanordnung zum Betrieb einer 36 W-Leuchtstofflampe an 220 V-Wechselspannung zusammengestellt:

FD : EF25, 50 mH
C1 : 68 nF, 250 V~
D1 - D4 : Gleichrichter-Brückenschaltung B250, C800
C2 : 68 nF, 250 V~
R1, R6 : 510 kΩ
C3 : 47 nF, 250 V-
D5 : 1N4005
DC : N413M
R2, R3 : 8,2 Ω
T1, T2 : MJE13007
R4, R5 : 0.68 Ω
D6 - D11 : RGP10J
C6-C8 : 10 nF, 400 V~
RK1 : 5 Windungen (13x7x5)
RK2, RK3 : 1 Windung
C4 : 10 µF, 450 V-
L1 : EF25, 0,9 mH
C5 : 150 nF, 400 V-
C9 : 3,3 nF, 400 V~

Mit einer solchermaßen bestückten Schaltungsanordnung ergibt sich bei gegebener Netzspannung eine Kurvenform des Netzstromes mit einem Netzleistungsfaktor von größer 0,99; der Netzstrom-Oberwellengehalt nach VDE/IEC liegt weit unter den zulässigen Grenzen.

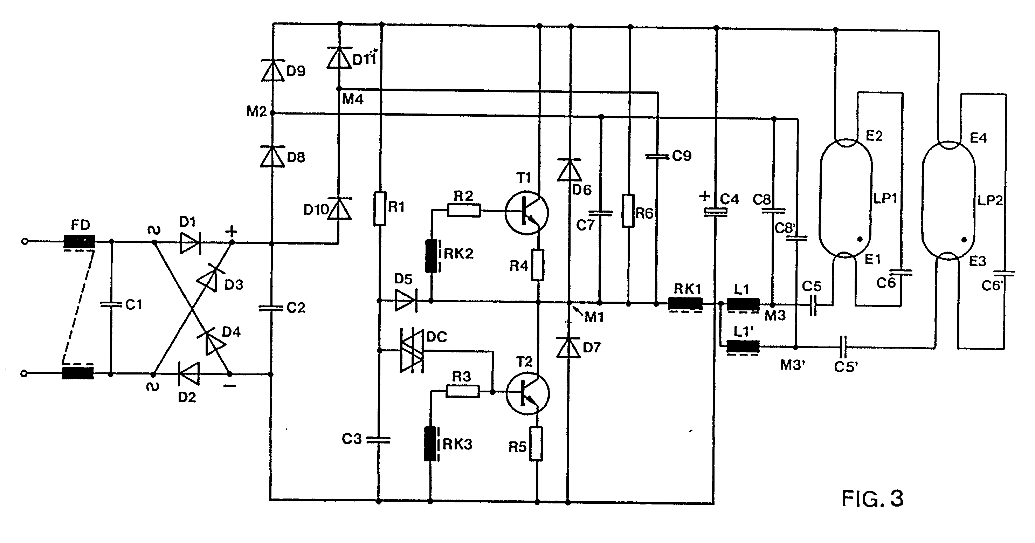

Figur 3 zeigt das genaue Schaltbild einer Schaltungsanordnung mit erfindungsgemäßem Oberwellenfilter zum Betrieb von zwei parallelgeschalteten Niederdruckentladungslampen. Die Schaltungsanordnung entspricht weitgehend der in Figur 2 dargestellten Schaltung. Zusätzlich ist jedoch parallel zur Lampe LP1 eine weitere Lampe LP2 mit Elektroden E3, E4 sowie parallel zum ersten Serienresonanzkreis ein zweiter Serienresonanzkreis aus Resonanzinduktivität L1', Koppelkondensator C5' und Resonanzkapazität C6' vorgesehen. Der Mittenabgriff M2 zwischen den beiden ersten Dioden D8, D9 ist hier neben dem ersten Kondensator C8 an den Mittenabgriff M3 zusätzlich über den Kondensator C8' mit dem Mittenabgriff M3' zwischen der Resonanzinduktivität L1' und dem Koppelkondensator C5' des zweiten Resonanzkreises verbunden.

## Patentansprüche

1. Schaltungsanordnung zum hochfrequenten Betrieb einer oder mehrerer parallel zueinander geschalteter Niederdruckentladungslampen (LP1, LP2), wobei die Schaltung folgende Merkmale aufweist:
   - einen Netzgleichrichter (2) mit parallel zum Gleichstromausgang geschaltetem Stützkondensator (C2)
   - einen an den Gleichstromausgang des Netzgleichrichters (2) angeschlossenen Gegentaktfrequenzgenerator (3) mit zwei alternierend schaltenden Transistoren (T1, T2) und einer Ansteuerschaltung, wobei ein Mittenabgriff (M1) zwischen den beiden Transistoren (T1, T2) vorgesehen ist
   - einen jeder Niederdruckentladungslampe (LP1, LP2) zugeordneten Serienresonanzkreis (4), bestehend aus Resonanzinduktivität (L1, L1'), Kopplungskondensator (C5, C5') und Resonanzkapazität (C6, C6')
   - Anschlußleitungen für die Niederdruckentladungslampen (LP1, LP2), wobei jeweils eine Leitung die ersten Elektroden (E1, E3) der Lampen (LP1, LP2) über die Resonanzinduktivitäten (L1, L1') mit dem Mittenabgriff (M1) zwischen den beiden Transistoren (T1, T2) und jeweils eine weitere Leitung die zweiten Elektroden (E2, E4) der Lampen (LP1, LP2) mit dem Plus- und/oder Minuspol des Netzgleichrichters (2) verbindet
   - einen Glättungskondensator (C4) parallel zu den Schaltstrecken der beiden Transistoren (T1, T2) des Gegentaktfrequenzgenerators (3)
   - ein Oberwellenfilter, bestehend aus einer Reihenschaltung von zwei Dioden (D8, D9) sowie aus zwei oder mehr Kondensatoren (C7, C8, C8'), wobei die Reihenschaltung der Dioden (D8, D9) in Gleichstromvorwärtsrichtung und in Serie zum Stützkondensator (C2) am Netzgleichrichter (2) angeschlossen ist und der Mittenabgriff (M2) zwischen den beiden Dioden (D8, D9) über den ersten Kondensator (C7) mit dem Mittenabgriff (M1) zwischen den beiden Transistoren (T1, T2) und über jeweils einen weiteren Kondensator (C8, C8') mit dem Mittenabgriff (M3, M3') zwischen der Resonanzinduktivität (L1, L1') des jeweiligen Serienresonanzkreises (4) und der entsprechenden Elektrode (E1, E3) der Lampe (LP1, LP2) verbunden ist,
dadurch gekennzeichnet, daß als Oberwellenfilter parallel zur Reihenschaltung der beiden Dioden (D8, D9) in Gleichstromvorwärtsrichtung zwei weitere Dioden (D10, D11) in Serie geschaltet sind, wobei der Mittenabgriff (M4) zwischen den beiden weiteren Dioden (D10, D11) über einen Kondensator (C9) mit dem Mittenabgriff (M1) zwischen den beiden Transistoren (T1, T2) des Gegentaktfrequenzgenerators (3) verbunden ist.

2. Schaltungsanordnung nach Anspruch 1, dadurch gekennzeichnet, daß die Summe der Kapazitäten in nF der Kondensatoren (C7, C8, C8' C9) des Oberwellenfilters einen durch die Formel

$$C_{Res} = (P_{Ges} \cdot \sqrt{2} \cdot 10^9) / (U_N^2 \cdot f_B)$$

errechneten Höchstwert nicht überschreitet, wobei $P_{Ges}$ die von der bzw. den Lampen plus Schaltungsanordnung aufgenommene Gesamtleistung in W, $U_N$ die Nenn-Netzspannung in V und $f_B$ die Lampen-Betriebsfrequenz in Hz ist.

3. Schaltungsanordnung nach Anspruch 1 und 2, dadurch gekennzeichnet, daß der Kondensator (C9), der den Mittenabgriff (M4) zwischen den beiden weiteren Dioden (D10, D11) mit dem Mittenabgriff (M1) zwischen den beiden Transistoren (T1, T2) des Gegentaktfrequenzgenerators (3) verbindet, eine Kapazität aufweist, die 0,1 bis 0,4 mal der Summe der Kapazitäten der Kondensatoren (C7, C8, C8', C9) des Oberwellenfilters ist.

## Claims

1. Circuit arrangement for the high-frequency operation of one or more low-pressure discharge lamps (LP1, LP2) connected in parallel with one another, the circuit exhibiting the following features:
   - a mains rectifier (2) with back-up capacitor (C2) connected in parallel with the direct-current output

- a push-pull frequency generator (3) connected to the direct-current output of the mains rectifier (2), comprising two transistors (T1, T2), switching alternately, and a drive circuit, a centre tap (M1) being provided between the two transistors (T1, T2)
- a series resonant circuit (4) associated with each low-pressure discharge lamp (LP1, LP2), consisting of a resonant inductance (L1, L1'), coupling capacitor (C5, C5') and resonant capacitance (C6, C6')
- connecting lines for the low-pressure discharge lamps (LP1, LP2), one line in each case connecting the first electrodes (E1, E3) of the lamps (LP1, LP2) via the resonant inductances (L1, L1') to the centre tap (M1) between the two transistors (T1, T2) and one further line in each case connecting the two electrodes (E2, E4) of the lamps (LP1, LP2) to the positive and/or negative pole of the mains rectifier (2)
- a smoothing capacitor (C4) in parallel with the switching paths of the two transistors (T1, T2) of the push-pull frequency generator (3)
- a harmonics filter, consisting of a series circuit of two diodes (D8, D9) and of two or more capacitors (C7, C8, C8'), the series circuit of the diodes (D8, D9) being connected in direct-current forward direction and in series with the back-up capacitor (C2) to the mains rectifier (2) and the centre tap (M2) between the two diodes (D8, D9) being connected via the first capacitor (C7) to the centre tap (M1) between the two transistors (T1, T2) and via in each case one further capacitor (C8, C8') to the centre tap (M3, M3') between the resonant inductance (L1, L1') of the respective series resonant circuit (4) and the corresponding electrode (E1, E3) of the lamp (LP1, LP2).

characterised in that two further diodes (D10, D11) are connected in series in the direct-current forward direction in parallel with the series circuit of the two diodes (D8, D9) as harmonics filter, the centre tap (M4) between the two further diodes (D10, D11) being connected via a capacitor (C9) to the centre tap (M1) between the two transistors (T1, T2) of the push-pull frequency generator (3).

2. Circuit arrangement according to Claim 1, characterised in that the sum of the capacitances in nF of the capacitors (C7, C8, C8', C9) of the harmonics filter does not exceed a maximum value calculated by the formula

$$C_{Res} = (P_{Tot} \cdot \sqrt{2}.10^9) / (U_N^2.f_B),$$

where $P_{Tot}$ is the total power in W absorbed by the lamp or lamps plus circuit arrangement, $U_N$ is the rated mains voltage in V and $f_B$ is the lamp operating frequency in Hz.

3. Circuit arrangement according to Claim 1 and 2, characterised in that the capacitor (C9), which connects the centre tap (M4) between the two further diodes (D10, D11) with the centre tap (M1) between the two transistors (T1, T2) of the push-pull frequency generator (3), exhibits a capacitance, which is 0.1 - 0.4 times the sum of the capacitances of the capacitors (C7, C8, C8', C9) of the harmonics filter.

## Revendications

1. Montage pour le fonctionnement à haute fréquence d'une ou de plusieurs lampes à décharge basse tension (LP1, LP2) branchées en parallèle, ce montage présentant les caractéristiques suivantes :

- un redresseur d'alimentation réseau (2) comportant un condensateur d'assistance (C2) branché en parallèle avec la sortie à courant continu,
- un générateur symétrique de fréquence (3) raccordé à la sortie à courant continu du redresseur d'alimentation réseau (2) et comportant deux transistors (T1,T2) alternativement conducteurs et un circuit de commande, une prise médiane (M1) étant prévue entre les deux transistors (T1,T2),
- un circuit résonnant série (4) associé à chaque lampe à décharge basse pression (LP1,LP2) et constitué par une inductance à résonance (L1,L1'), un condensateur de couplage (C5,C5') et une capacité à résonance (C6,C6'),
- des conducteurs de raccordement pour les lampes à décharge basse pression (LP1,LP2), dont l'un raccorde respectivement les premières électrodes (E1,E3) des lampes (LP1,LP2) par l'intermédiaire d'inductances à résonance (L1,L1') à la prise médiane (M1) située entre les deux transistors (T1,T2) et dont l'autre raccorde respectivement les secondes électrodes (E2,E4) des lampes (LP1,LP2) au pôle positif et/ou négatif du redresseur d'alimentation réseau (2),

- un condensateur de lissage (C4) branché en parallèle avec les sections de commutation des deux transistors (T1,T2) du générateur symétrique de fréquence (3),

- un filtre suppresseur d'harmoniques supérieurs, constitué par un montage série de deux diodes (D8,D9) ainsi que par deux ou plusieurs condensateurs (C7,C8,C8'), le montage série des diodes (D8,D9) étant raccordé dans le sens passant pour le courant continu et en série avec le condensateur d'assistance (C2) au redresseur d'alimentation réseau (2), tandis que la prise médiane (M2) située entre les deux diodes (D8,09) est raccordée, par l'intermédiaire du premier condensateur (C7), à la prise médiane (M1) située entre les deux transistors (T1,T2) et, par l'intermédiaire respectivement d'un autre condensateur (C8,C8'), à la prise médiane (M3,M3') située entre l'inductance à résonance (L1,L1') du circuit résonnant respectif (4) et l'électrode correspondante (E1,E3) de la lampe (LP1,LP2),

caractérisé par le fait qu'on utilise, comme filtre suppresseur d'harmoniques, deux autres diodes (D10,D11) branchées en série et montées en parallèle avec le circuit série des deux diodes (D8,D9) dans le sens passant du courant continu, la prise médiane (M4) située entre les deux diodes (D10,D11) étant raccordée par l'intermédiaire d'un condensateur (C9) à la prise médiane (M1) située entre les deux transistors (T1,T2) du générateur symétrique de fréquence (3).

2. Montage suivant la revendication 1, caractérisé par le fait que la somme des capacités, exprimée en nF, des condensateurs (C7,C8,C8',C9) du filtre suppresseur d'harmoniques ne dépasse pas une valeur maximale calculée au moyen de la formule

$$C_{Res} = (P_{Ges}.\sqrt{2}.10^9) / (U_N^2.f_B)$$

$P_{Ges}$ désignant la puissance totale en W, absorbée par la ou les lampes plus le montage, $U_N$ la tension nominale du réseau en V, et $f_B$ la fréquence de fonctionnement des lampes en Hz.

3. Montage suivant les revendications 1 et 2, caractérisé par le fait que le condensateur (C9), qui relie la prise médiane (M4) située entre les deux autres diodes (D10,D11) et la prise médiane (M1) située entre les deux transistors (T1,T2) du générateur symétrique de fréquence (3), possède une capacité comprise entre 0,1 et 0,4 fois la somme des capacités des condensateurs (C7,C8,C8',C9) du filtre suppresseur d'harmoniques.

FIG.1

EP 0 253 224 B1

FIG. 2

EP 0 253 224 B1

FIG. 3

EP 0 253 224 B1